# EUROPEAN PATENT APPLICATION

(11) **EP 4 325 527 A1**
(43) Date of publication of application: **21.02.2024**
(21) Application number: 22788191.9
(22) Date of filing: 13.04.2022
(51) Int. Cl.: H01B 5/02, H01B 13/00, H01M 8/0215, H01M 8/0228, H01M 8/04, H01M 8/12, H01M 8/2475

(54) **CONDUCTOR MEMBER, ELECTROCHEMICAL CELL DEVICE, MODULE, MODULE ACCOMMODATING DEVICE, SLURRY, CONDUCTOR MEMBER MANUFACTURING METHOD, CONDUCTIVE MATERIAL, AND CONDUCTIVE POWDER MATERIAL**

(30) Priority: 13.04.2021 JP 2021067807
(71) Applicant: Kyocera Corporation, Kyoto-shi Kyoto 612-8501 (JP)
(72) Inventor: HIRAO, Kazuki, Kyoto-shi, Kyoto 612-8501 (JP); HARA, Akihiro, Kyoto-shi, Kyoto 612-8501 (JP); YAMAGUCHI, Atsuki, Kyoto-shi, Kyoto 612-8501 (JP)
(74) Representative: Viering, Jentschura & Partner mbB Patent- und Rechtsanwälte
(86) International application number: PCT/JP2022/017724
(87) International publication number: WO 2022/220268

(57) **Abstract**

An electrically conductive member includes a base member and a coating layer. The base member contains chromium. The coating layer covers the base member. The coating layer contains a conductive oxide and a first oxide that is an oxide of a first element whose absolute values of first ionization energy and free energy of formation of an oxide are smaller than those of chromium.

## Description

### TECHNICAL FIELD

The present disclosure relates to an electrically conductive member, an electrochemical cell device, a module, a module housing device, a slurry, an electrically conductive member manufacturing method, a conductive material, and a conductive powder material.

### BACKGROUND OF INVENTION

In recent years, various fuel cell stack devices each including a plurality of fuel cells have been proposed, as next-generation energy. A fuel cell is a type of electrochemical cell capable of obtaining electrical power by using a fuel gas such as a hydrogen-containing gas and an oxygen-containing gas such as air.

### CITATION LIST

### PATENT LITERATURE

Patent Document 1: WO2009/131180

### SUMMARY

In an aspect of an embodiment, an electrically conductive member includes a base member and a coating layer. The base member contains chromium. The coating layer covers the base member. The coating layer contains a conductive oxide and a first oxide that is an oxide of a first element whose absolute values of first ionization energy and free energy of formation of an oxide are smaller than those of chromium.

An electrochemical cell device of the present disclosure includes two or more electrochemical cells each including an element portion and the electrically conductive member described above.

A module of the present disclosure includes the electrochemical cell device described above and a storage container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from the side of an air electrode.
FIG. 1C is a side view of an example of the electrochemical cell according to the first embodiment when viewed from the side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is a horizontal cross-sectional view illustrating an example of an electrically conductive member according to an embodiment.
FIG. 4A is a cross-sectional view taken along a line A-A illustrated in FIG. 3.
FIG. 4B is an enlarged view of a region B illustrated in FIG. 4A.
FIG. 4C is an enlarged view of a coating layer illustrated in FIG. 4B.
FIG. 5 is an exterior perspective view illustrating an example of a module according to the first embodiment.
FIG. 6 is an exploded perspective view schematically illustrating an example of a module housing device according to the first embodiment.
FIG. 7A is a cross-sectional view illustrating an electrochemical cell according to a second embodiment.
FIG. 7B is an enlarged cross-sectional view of an electrically conductive member according to the second embodiment.
FIG. 8A is a perspective view illustrating an electrochemical cell according to a third embodiment.
FIG. 8B is a partial cross-sectional view of the electrochemical cell illustrated in FIG. 8A.
FIG. 9A is a horizontal cross-sectional view illustrating an example of an electrochemical cell according to a fourth embodiment.
FIG. 9B is a horizontal cross-sectional view illustrating another example of the electrochemical cell according to the fourth embodiment.
FIG. 9C is a horizontal cross-sectional view illustrating another example of the electrochemical cell according to the fourth embodiment.
FIG. 9D is an enlarged view of a region C illustrated in FIG. 9A.
FIG. 10 is a view schematically illustrating an example of a conductive powder material according to an embodiment.
FIG. 11 is a view schematically illustrating an example of a slurry according to an embodiment.
FIG. 12 is a flowchart illustrating an example of a manufacturing method for manufacturing an electrically conductive member according to an embodiment.

### DESCRIPTION OF EMBODIMENTS

Hereinafter, embodiments of an electrically conductive member, an electrochemical cell device, a module, a module housing device, a slurry, an electrically conductive member manufacturing method, a conductive material, and a conductive powder material disclosed in the present application will be described in detail with reference to the accompanying drawings. Note that the disclosure is not limited by the following embodiments.

Note that the drawings are schematic and that the dimensional relationships between elements, the proportions of the elements, and the like may differ from the actual ones. Further, there may be differences between the drawings in the dimensional relationships, proportions, and the like.

### First Embodiment

### Configuration of Electrochemical Cell

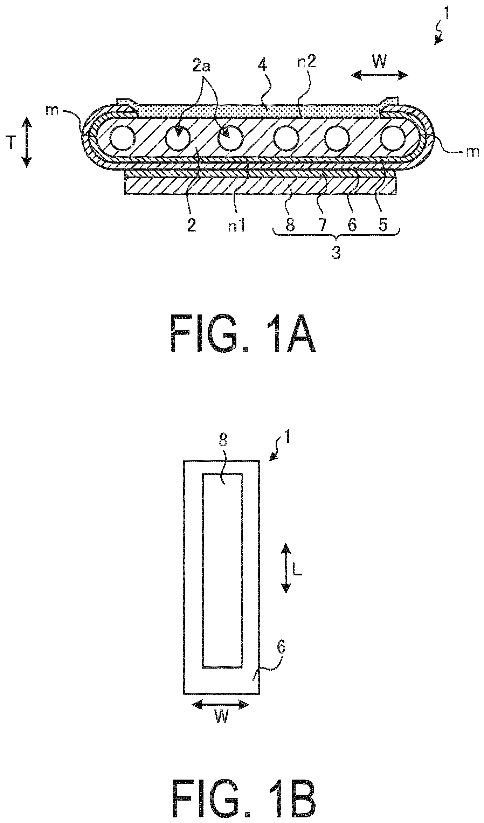

First, with reference to FIGs. 1A to 1C, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

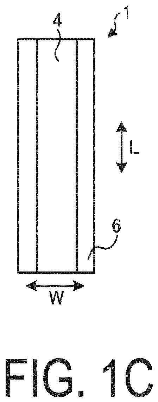

FIG. 1A is a horizontal cross-sectional view illustrating an example of an electrochemical cell according to the first embodiment, FIG. 1B is a side view of an example of the electrochemical cell according to the first embodiment when viewed from an air electrode side, and FIG. 1C is a side view of an example of the electrochemical cell 1 according to the first embodiment when viewed from an interconnector side. Note that FIGs. 1A to 1C each illustrate an enlarged view of a part of a respective one of configurations of the electrochemical cell. Hereinafter, the electrochemical cell may be simply referred to as a cell.

In the example illustrated in FIGs. 1A to 1C, the cell 1 is hollow flat plate-shaped, and has an elongated plate shape. As illustrated in FIG. 1B, the overall shape of the cell 1 when viewed from the side is, for example, a rectangle having a side length of from 5 cm to 50 cm in a length direction L and a length of from 1 cm to 10 cm in a width direction W orthogonal to the length direction L. The overall thickness in a thickness direction T of the cell 1 is from 1 mm to 5 mm.

As illustrated in FIG. 1A, the cell 1 includes a support substrate 2 with electrical conductivity, an element portion 3, and an interconnector 4. The support substrate 2 has a pillar shape with a pair of facing flat surfaces n1, n2 and a pair of side surfaces m in a circular arc shape connecting the flat surfaces n1, n2.

The element portion 3 is provided on one flat surface n1 of the support substrate 2. The element portion 3 includes a fuel electrode 5, a solid electrolyte layer 6, and an air electrode 8. In the example illustrated in FIG. 1A, the interconnector 4 is provided on the other flat surface n2 of the cell 1. Note that the cell 1 may include an intermediate layer 7 between the solid electrolyte layer 6 and the air electrode 8.

As illustrated in FIG. 1B, the air electrode 8 does not extend to the lower end of the cell 1. At the lower end portion of the cell 1, only the solid electrolyte layer 6 is exposed on a surface of the flat surface n1. As illustrated in FIG. 1C, the interconnector 4 may extend to the lower end of the cell 1. At a lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of constituent members constituting the cell 1 will be described.

The support substrate 2 includes gas-flow passages 2a, in which gas flows. The example of the support substrate 2 illustrated in FIG. 1A includes six gas-flow passages 2a. The support substrate 2 has gas permeability and allows the fuel gas flowing through the gas-flow passages 2a to pass through to the fuel electrode 5. The support substrate 2 may have electrical conductivity. The support substrate 2 having electrical conductivity causes electricity generated in a power generating element to be collected in the interconnector 4.

The material of the support substrate 2 includes, for example, an iron group metal component and an inorganic oxide. For example, the iron group metal component may be, for example, Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, porous electrically conductive ceramics, for example, ceramics containing: ZrO₂ in which a calcium oxide, a magnesium oxide, or a rare earth element oxide is solid-dissolved, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is contained as a solid solution may be referred to as stabilized zirconia. Stabilized zirconia also includes partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is contained as a solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 has gas permeability. The open porosity of the air electrode 8 may be, for example, 20% or more, and particularly may be in a range from 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

When the element portion 3 includes the intermediate layer 7, the intermediate layer 7 functions as a diffusion prevention layer. When an element such as strontium (Sr) contained in the air electrode 8 diffuses into the solid electrolyte layer 6, a resistance layer such as, for example, SrZrOs is formed in the solid electrolyte layer 6. The intermediate layer 7 suppresses the diffusion of Sr and makes it difficult to form SrZrOs and other oxides having electrical insulation properties.

The material of the intermediate layer 7 is not particularly limited as long as the material is one generally used for the diffusion prevention layer of Sr. The material of the intermediate layer 7 includes, for example, cerium oxide (CeO₂) in which a rare earth element except cerium (Ce) is in solid solution. As the rare earth element, gadolinium (Gd), samarium (Sm), or the like are used.

The interconnector 4 is dense and hardly causes leakage of fuel gas flowing through the gas-flow passages 2a inside the support substrate 2 and oxygen-containing gas flowing outside the support substrate 2. The interconnector 4 may have a relative density of 93% or more; particularly 95% or more.

The material of the interconnector 4 may be a lanthanum chromite-based perovskite oxide (LaCrO₃-based oxide) or a lanthanum strontium titanium-based perovskite oxide (LaSrTiO₃-based oxide). These materials have electrical conductivity and are less likely to reduce or oxidize upon coming into contact with the fuel gas (a hydrogen-containing gas) or the oxygen-containing gas (such as air).

### Configuration of Electrochemical Cell Device

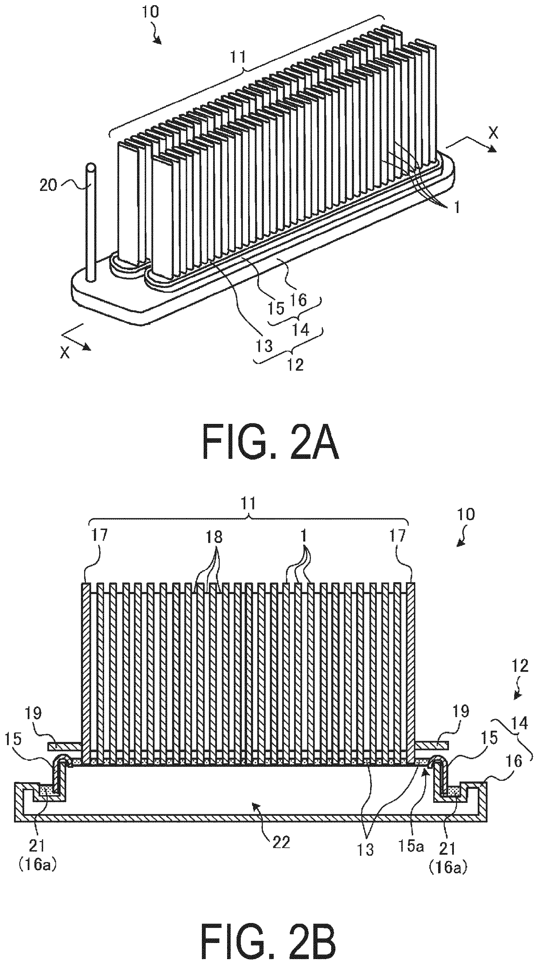

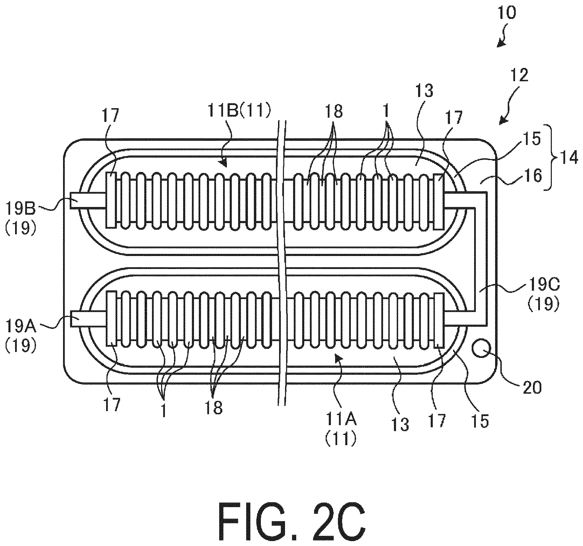

An electrochemical cell device according to the present embodiment using the cell 1 described above will be described with reference to FIGs. 2A to 2C. FIG. 2A is a perspective view illustrating an example of the electrochemical cell device according to the first embodiment, FIG. 2B is a cross-sectional view taken along a line X-X illustrated in FIG. 2A, and FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, which constitute the support member 14, are made of metal.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

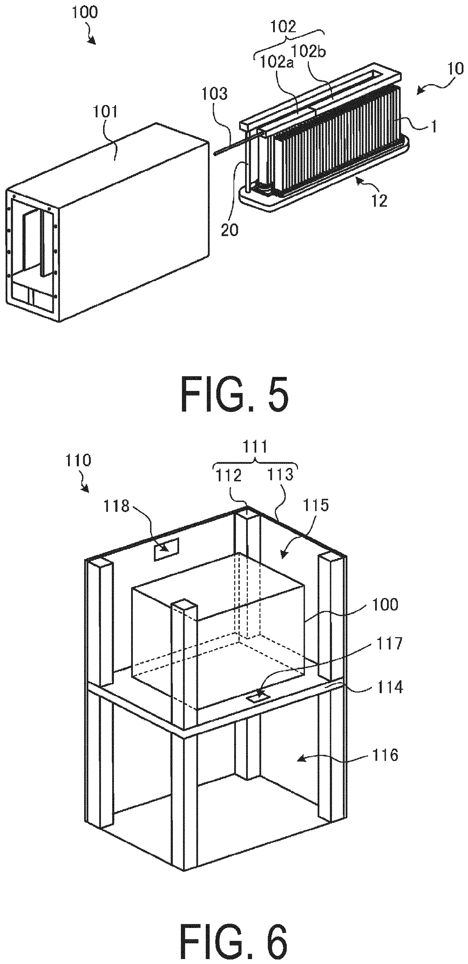

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20, and is supplied from the gas tank 16 to the gas-flow passages 2a (see FIG. 1A) inside the cells 1. The fuel gas supplied to the gas tank 16 is produced by a reformer 102 (see FIG. 5), which will be described later.

A hydrogen-rich fuel gas can be produced, for example, by steam-reforming a raw fuel. When the fuel gas is produced by steam-reforming, the fuel gas contains steam.

In the example illustrated in FIG. 2A, two rows of the cell stacks 11, two support bodies 15, and the gas tank 16 are provided. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, a bonding portion between the inner wall of the insertion hole 15a and the lower end portion of each of the cells 1 is filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, electrically conductive members 18 are each interposed between adjacent ones of the cells 1 of the plurality of cells 1. Each of the electrically conductive members 18 electrically connects in series the fuel electrode 5 of one of the adjacent ones of the cells 1 with the air electrode 8 of the other one of the adjacent ones of the cells 1. More specifically, the electrically conductive member 18 connects the interconnector 4 electrically connected to the fuel electrode 5 of the one of the adjacent ones of the cells 1 and the air electrode 8 of the other one of the adjacent ones of the cells 1.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1, and conducts the electricity to the outside. Note that in FIG. 2A, the end current collection members 17 are not illustrated.

As illustrated in FIG. 2C, in the cell stack device 10, two cell stacks 11A and 11B, which are connected in series, function as one battery. Thus, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside, and is electrically connected to the end current collection member 17 on a positive electrode side in the cell stack 11A. The negative electrode terminal 19B functions as a negative electrode when the electrical power generated by the cell stack 11 is output to the outside, and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Electrically Conductive Member

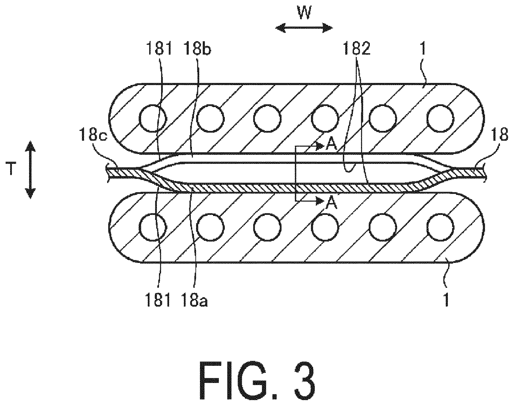

Details of the electrically conductive member 18 according to the first embodiment will be described with reference to FIG. 3 to FIG. 4C. FIG. 3 is a horizontal cross-sectional view illustrating an example of an electrically conductive member according to an embodiment.

As illustrated in FIG. 3, the electrically conductive member 18 includes connecting portions 18a connected to one cell 1 and connecting portions 18b connected to another cell 1. The electrically conductive member 18 includes coupling portions 18c at both ends in the width direction W to connect the connecting portions 18a and 18b. This enables the electrically conductive member 18 to electrically connect the cells 1 adjacent to each other in the thickness direction T. Note that in FIG. 3, the shape of each cell 1 is illustrated by simplification.

The connecting portions 18a and 18b each include a surface 181 facing the cell 1, and the connecting portions 18a and 18b include a surface 182 facing the connecting portions 18b and 18a, respectively.

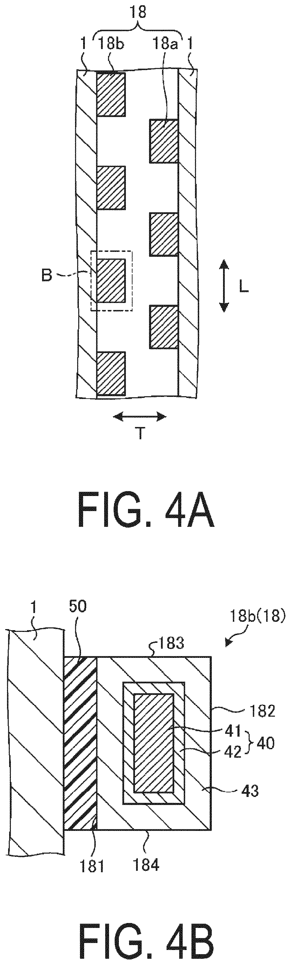

FIG. 4A is a cross-sectional view taken along a line A-A illustrated in FIG. 3. FIG. 4B is an enlarged view of a region B illustrated in FIG. 4A.

The electrically conductive member 18 extends in the length direction L of the cell 1. As illustrated in FIG. 4A, a plurality of the connecting portions 18a and 18b of the electrically conductive member 18 are alternately located along the length direction L of the cell 1. The electrically conductive member 18 is in contact with the cell 1 at each of the connecting portions 18a and 18b.

As illustrated in FIG. 4B, the electrically conductive member 18 includes a base member 40 and a coating layer 43. The electrically conductive member 18 includes the surfaces 181 and 182 facing each other across the base member 40. The electrically conductive member 18 includes the surfaces 183 and 184 connecting the surface 181 and the surface 182.

The electrically conductive member 18 (connecting portion 18b) is bonded to the cell 1 via a bonding material 50. The bonding material 50 is located between the surface 181 of the electrically conductive member 18 and the cell 1, and is bonding the electrically conductive member 18 and the cell 1. The surfaces 182 to 184 are exposed to, for example, an oxidizing atmosphere such as air.

The electrically conductive member 18 includes the base member 40, and the coating layer 43. The base member 40 has electrical conductivity and thermal resistance. The base member 40 contains chromium. The base member 40 is made of, for example, stainless steel. The base member 40 may, for example, contain a metal oxide.

The base member 40 may have a laminated structure. In the example illustrated in FIG. 4B, the base member 40 includes a first base member layer 41 and a second base member layer 42. The second base member layer 42 has a higher chromium content than the first base member layer 41. The second base member layer 42 contains, for example, a chromium oxide (Cr₂O₃). In this way, the base member 40 includes the second base member layer 42, so that the durability of the electrically conductive member 18 is enhanced. Note that the base member 40 may or may not have the second base member layer 42 partially. The base member 40 may have a further laminated structure.

The coating layer 43 covers the base member 40. The coating layer 43 contains a conductive oxide. The oxide may contain, for example, manganese (Mn) and cobalt (Co). The oxide may contain elements other than Mn and Co, for example zinc (Zn) and aluminum (Al). The oxide may be a composite oxide having a spinel structure. Examples of the composite oxide having such a structure may include Zn(CoₓMn₁₋ₓ)₂O₄ (0 < x < 1) such as ZnMnCoO₄, Mn_{1.5}Co_{1.5}O₄, MnCo₂O₄, and CoMn₂O₄. In such a composite oxide, for example, a ratio of Fe to a total of metal elements contained in the composite oxide may be 60 atom% or less.

The coating layer 43 may contain an oxide of an element whose absolute values of first ionization energy and free energy of formation of an oxide are smaller than those of chromium. Examples of the oxide of the element include Y₂O₃, CeO₂, EuO, and PrO₂. Hereinafter, the element whose absolute values of first ionization energy and free energy of formation of an oxide are smaller than those of chromium is referred to as a first element, and an oxide of the first element is referred to as a first oxide. The coating layer 43 contains, for example, one or more of the first oxides. The first oxide may contain an element other than the first element, such as gadolinium (Gd), samarium (Sm), or ytterbium (Yb). In the first oxide, for example, the first element may be substituted with Gd, Sm, or Yb at a ratio of 30 atom% or less.

In this manner, the coating layer 43 contains the specific oxide and the first oxide as described above, so that the second base member layer 42 is less likely to grow, and thus the electrically conductive member 18 is less likely to increase in internal resistance. This can reduce a decrease in the battery performance of the cell 1.

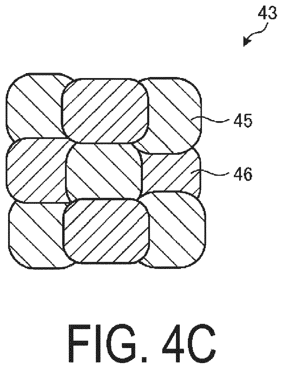

The coating layer 43 will be further described in detail with reference to FIG. 4C. FIG. 4C is an enlarged view of the coating layer illustrated in FIG. 4B.

As illustrated in FIG. 4C, the coating layer 43 may contain oxide particles 45 and first oxide particles 46. The oxide particles 45 contain a conductive oxide. The oxide particles 45 may contain a composite oxide having a spinel structure. The first oxide particles 46 include the first oxide.

The coating layer 43 may be a sintered body or a green compact. The coating layer 43 may be crystalline or amorphous. A crystalline phase and an amorphous phase may be mixed in the coating layer 43.

The coating layer 43 may contain 5 vol% or more and 50 vol% or less of the first oxide particles 46. The content of the first oxide particles 46 is in such a range, so that for example, the second base member layer 42 is less likely to grow, and thus the electrically conductive member 18 is less likely to increase in internal resistance. This can reduce a decrease in the battery performance of the cell 1. Note that a volume ratio (%) of the first oxide particles 46 can be calculated as (v₄₆/(v₄₅ + v₄₆)) x 100, where a volume of the oxide particles 45 in the coating layer 43 is defined as v₄₅ and a volume of the first oxide particles 46 is defined as v₄₆.

The first oxide particles 46 contained in the coating layer 43 may have an average particle diameter of 0.1 µm or more and 0.5 µm or less. The average particle diameter of the first oxide particles 46 is in such a range, so that for example, the second base member layer 42 is less likely to grow, and thus the electrically conductive member 18 is less likely to increase in internal resistance. This can reduce a decrease in the battery performance of the cell 1. An average particle diameter of the first oxide particles 46 may be 1 µm or less and further may be 0.5 µm or less. The average particle diameter of the first oxide particles 46 may be smaller than the average particle diameter of the oxide particles 45. When the particle diameter of the first oxide particles 46 is small, the second base member layer 42 tends to be further less likely to grow.

The coating layer 43 may have a higher porosity in a portion farther from the base member 40 than in a portion closer to the base member 40. The electrically conductive member 18 may include SiO₂ between the first base member layer 41 and the second base member layer 42. SiO₂ may be in the form of a layer or particles. A surface of the second base member layer 42 facing the first base member layer 41, a surface of the second base member layer 42 facing the coating layer 43, or both surfaces may have a linear average roughness from about 0.1 µm to about 3 µm. Although the reason is not clear, when the content of the first oxide particles 46 in the coating layer 43 is large, the line average roughness of each surface of the second base member layer 42 tends to be large. When the surface roughness of the surface of the second base member layer 42 facing the coating layer 43 is large, the coating layer 43 is less likely to be peeled off from the base member 40. The second base member layer 42 may have a wavelike cross-sectional shape.

The spinel structure of the oxide particles 45 contained in the coating layer 43 can be confirmed by, for example, identifying a crystal phase in a cross section of the electrically conductive member 18 by using an X-ray diffractometer (XRD).

The content of the first oxide particles 46 contained in the coating layer 43 can be confirmed, for example, by mapping the first element in a cross section of the electrically conductive member 18 by using a high angle annular dark field scanning transmission electron microscope (HAADF-STEM), a focus ion beam scanning electron microscope (FIB-SEM), or an electron probe microanalyzer (EPMA). The average particle diameter of the first oxide particles 46 may be calculated as an equivalent circle diameter based on a result obtained by observing a cross section of the coating layer 43 by using a scanning electron microscope (SEM).

The coating layer 43 can be formed by, for example, a printing method, a dipping method, a thermal spraying method, a vapor deposition method, an electrodeposition method, and a sputtering method. For example, a conductive material may be coated with paint on the surface of the base member 40, and then fired and sintered to form the coating layer 43.

The electrically conductive member 18 may include an outer layer (not illustrated) to further cover the coating layer 43. The outer layer may be located between the coating layer 43 and the bonding material 50. The outer layer may be, for example, an electrically conductive ceramic such as a so-called ABO₃ type perovskite oxide like the material of the air electrode 8 described above. The outer layer may or may not contain the first oxide. Note that the coating layer 43 may contain a conductive perovskite oxide.

### Module

A module 100 according to an embodiment of the present disclosure using the cell stack device 10 described above will be described with reference to FIG. 5. FIG. 5 is an exterior perspective view illustrating a module according to the first embodiment, with a front surface and a rear surface, which are a part of a storage container 101, removed and the cell stack device 10 of the fuel cell housed in the storage container 101 taken out rearward.

As illustrated in FIG. 5, the module 100 includes the storage container 101, and the cell stack device 10 housed in the storage container 101. The reformer 102 is disposed above the cell stack device 10.

The reformer 102 generates a fuel gas by reforming a raw fuel such as natural gas and kerosene, and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam reforming, which is a highly efficient reformation reaction.

Then, the fuel gas generated by the reformer 102 is supplied to the gas-flow passages 2a (see FIG. 1A) of the cell 1 through the gas circulation pipe 20, the gas tank 16, and the support member 14.

In the module 100 having the above-described configuration, the temperature in the module 100 during normal power generation is about 500 to 1000°C due to combustion of gas and power generation of the cell 1.

As described above, the module 100 has such a configuration of housing the cell stack device 10 that reduce a decrease in battery performance, so that the module 100 can reduce a decrease in battery performance.

### Module Housing Device

FIG. 6 is an exploded perspective view illustrating an example of a module housing device according to the first embodiment. A module housing device 110 according to the present embodiment includes an external case 111, the module 100 illustrated in FIG. 5, and an auxiliary device (not illustrated). The auxiliary device operates the module 100. The module 100 and the auxiliary device are housed in the external case 111. Note that in FIG. 6, the configuration is partially omitted.

The external case 111 of the module housing device 110 illustrated in FIG. 6 includes a support 112 and an external plate 113. A dividing plate 114 vertically partitions the interior of the external case 111. The space above the dividing plate 114 in the external case 111 is a module housing room 115 for housing the module 100. The space below the dividing plate 114 in the external case 111 is an auxiliary device housing room 116 for housing the auxiliary device configured to operate the module 100. Note that in FIG. 6, the auxiliary device housed in the auxiliary device housing room 116 is omitted.

The dividing plate 114 includes an air circulation hole 117 for causing air in the auxiliary device housing room 116 to flow into the module housing room 115 side. The external plate 113 constituting the module housing room 115 includes an exhaust hole 118 for discharging air inside the module housing room 115.

As described above, the module housing device 110 includes, in the module housing room 115, the module 100 that reduce a decrease in battery performance, so that the module housing device 110 can reduce a decrease in battery performance.

Note that, in the embodiment described above, the case where the support substrate of the hollow flat plate-shaped is used has been exemplified; however, the embodiment can also be applied to a cell stack device using a cylindrical support substrate.

### Second Embodiment

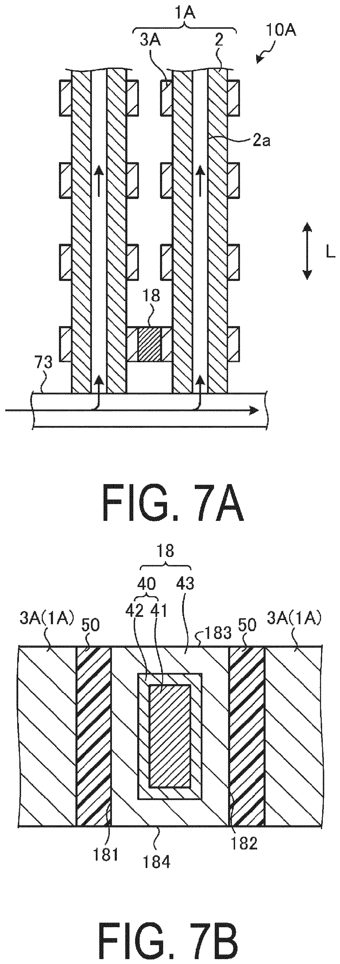

A cell and a cell stack device according to a second embodiment will be described with reference to FIGs. 7A and 7B.

In the embodiment described above, a so-called "vertically striped type" cell stack device, in which only one element portion including a fuel electrode, a solid electrolyte layer, and an air electrode is provided on the surface of the support substrate, is exemplified. However, the present disclosure can be applied to a horizontally striped type cell stack device with an array of so-called "horizontally striped type" cells, in which a plurality of element portions are provided on the surface of a support substrate at mutually separated locations, and adjacent element portions are electrically connected to each other.

FIG. 7A is a cross-sectional view illustrating an electrochemical cell according to the second embodiment. In a cell stack device 10A, a plurality of cells 1A extend in the length direction L from a pipe 73 through which a fuel gas flows. Each cell 1A includes a plurality of element portions 3A on the support substrate 2. A gas-flow passage 2a, through which a gas from the pipe 73 flows, is provided inside the support substrate 2. The element portions 3A on the support substrate 2 are electrically connected by a connection layer (not illustrated). The plurality of cells 1A are electrically connected to each other via the electrically conductive member 18. The electrically conductive member 18 is located between the element portions 3A each included in a corresponding one of the cells 1A and electrically connect adjacent ones of the cells 1A to each other. Specifically, an air electrode of the element portion 3A of one of the adjacent ones of the cells 1A is electrically connected to an interconnector electrically connected to a fuel electrode of the element portion 3A of the other one of the adjacent ones of the cells 1A.

FIG. 7B is an enlarged cross-sectional view of the electrically conductive member according to the second embodiment. As illustrated in FIG. 7B, the electrically conductive member 18 is bonded, via the bonding material 50, to each of the cells 1A adjacent to each other. The electrically conductive member 18 includes the surface 181 and the surface 182 facing each other across the base member 40. The electrically conductive member 18 includes the surfaces 183 and 184 connecting the surface 181 and the surface 182.

The electrically conductive member 18 is bonded to the cell 1A via the bonding material 50. The bonding material 50 is bonding a pair of the cells 1A facing each other across the electrically conductive member 18 and the electrically conductive member 18, with being located between the surface 181 of the electrically conductive member 18 and the element portion 3A of one of the pair of cells 1A and between the surface 182 of the electrically conductive member 18 and the element portion 3A of the other one of the pair of cells 1A. The surfaces 183 and 184 are exposed to, for example, an oxidizing atmosphere such as air.

The electrically conductive member 18 includes the base member 40 and the coating layer 43. The base member 40 includes the first base member layer 41 and the second base member layer 42. Each part constituting the electrically conductive member 18 can be made of, for example, a material such as that of the electrically conductive member 18 according to the first embodiment described above.

The coating layer 43 is located between the base member 40 and the element portion 3A of the cell 1A. The coating layer 43 contains a conductive oxide. The coating layer 43 may contain, for example, a composite oxide having a spinel structure. In such a composite oxide, for example, a ratio of Fe to a total of metal elements contained in the composite oxide may be 60 atom% or less. The coating layer 43 may contain composite oxide particles containing such a composite oxide.

The coating layer 43 contains the first oxide that is an oxide of the first element whose absolute values of first ionization energy and free energy of formation of an oxide are smaller than those of chromium. The coating layer 43 may contain the first oxide particles containing such a first oxide.

In this manner, the coating layer 43 contains the specific oxide as described above, so that the second base member layer 42 is less likely to grow, and thus the electrically conductive member 18 is less likely to increase in internal resistance due to the growth of the second base member layer 42. This causes the battery performance of the cell 1A to be less likely to be decreased, which can reduce a decrease in the battery performance of the cell stack device 10A. Note that, the electrically conductive member 18 may include an outer layer (not illustrated) to further cover the coating layer 43. The outer layer may be located between the coating layer 43 and the bonding material 50. The outer layer may be, for example, an electrically conductive ceramic such as a so-called ABO₃ type perovskite oxide like the material of the air electrode 8 described above.

### Third Embodiment

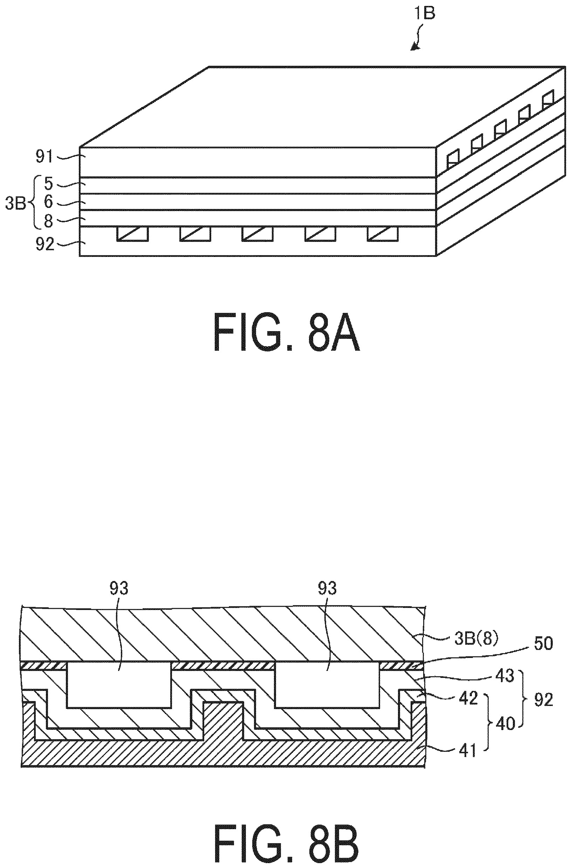

FIG. 8A is a perspective view illustrating an electrochemical cell according to a third embodiment. FIG. 8B is a partial cross-sectional view of the electrochemical cell illustrated in FIG. 8A.

As illustrated in FIG. 8A, a cell 1B, which is a flat plate-shaped electrochemical cell, includes an element portion 3B in which the fuel electrode 5, the solid electrolyte layer 6, and the air electrode 8 are laminated. In a cell stack device in which a plurality of the flat plate cells are layered, for example, a plurality of the cells 1B are electrically connected by electrically conductive members 91 and 92, which are metal layers each adjacent to the cells 1B. The electrically conductive members 91 and 92 electrically connect adjacent ones of the cells 1B to each other, and each include gas-flow passages for supplying gas to the fuel electrode 5 or the air electrode 8.

As illustrated in FIG. 8B, in the present embodiment, the electrically conductive member 92 includes gas-flow passages 93 for supplying a gas to the air electrode 8. The electrically conductive member 92 is bonded to the element portion 3B (air electrode 8) via the bonding material 50. Note that the electrically conductive member 92 may be in direct contact with the element portion 3B without the intervention of the bonding material 50. In other words, in the present variation, the electrically conductive member 92 may be directly connected to the element portion 3B without using the bonding material 50.

The electrically conductive member 92 includes the base member 40 and the coating layer 43. The base member 40 includes the first base member layer 41 and the second base member layer 42. Each part constituting the electrically conductive member 92 can be made of, for example, a material such as that of the electrically conductive member 18 described above.

The coating layer 43 is located between the base member 40 and the element portion 3B (air electrode 8). The coating layer 43 contains a conductive oxide. The coating layer 43 may contain, for example, a composite oxide having a spinel structure. The coating layer 43 contains the first oxide that is an oxide of the first element whose absolute values of first ionization energy and free energy of formation of an oxide are smaller than those of chromium. The coating layer 43 contains, for example, one or more of the first elements.

In this manner, the coating layer 43 contains the specific oxide as described above, so that the second base member layer 42 is less likely to grow, and thus the electrically conductive member 18 is less likely to increase in internal resistance. This causes the battery performance of the cell 1B to be less likely to be decreased, which can reduce a decrease in the battery performance of the electrochemical cell device.

### Fourth Embodiment

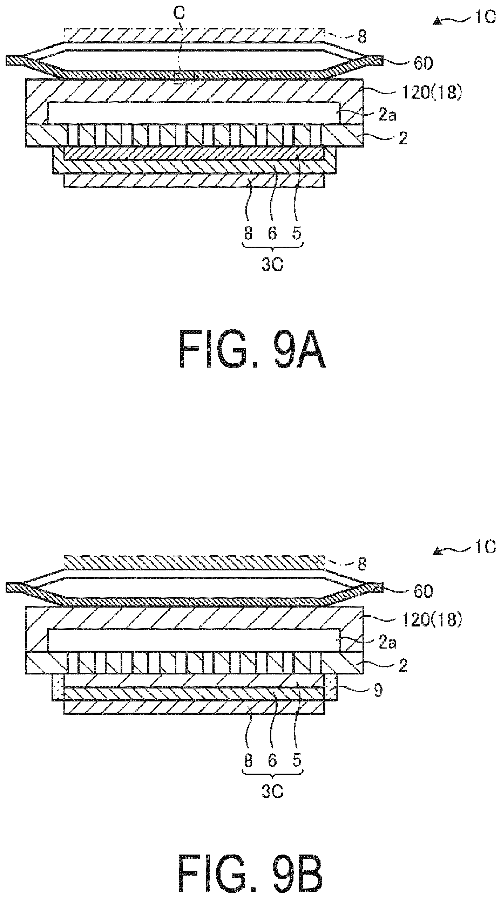

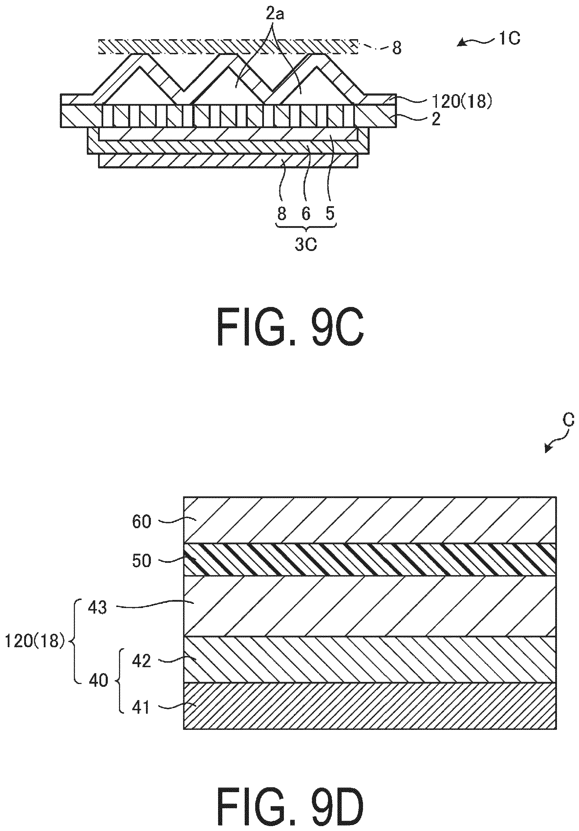

FIG. 9A is a horizontal cross-sectional view illustrating an example of an electrochemical cell according to a fourth embodiment. FIGs. 9B and 9C are horizontal cross-sectional views illustrating other examples of the electrochemical cell according to the fourth embodiment. FIG. 9D is an enlarged view of a region C illustrated in FIG. 9A. Note that FIG. 9D can also be applied to the examples in FIGs.9B and 9C.

As illustrated in FIGs. 9A to 9C, a cell 1C includes an element portion 3C in which the fuel electrode 5, the solid electrolyte layer 6, and the air electrode 8 are laminated, and the support substrate 2. The support substrate 2 includes through holes or fine holes at a portion in contact with the fuel electrode 5 of the element portion 3, and has a member 120 located outside the gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include a conductive coating layer. The support substrate 2 is an electrically conductive member that electrically connects adjacent ones of the cells 1C to each other. The element portion 3C may be directly formed on the support substrate 2 or may be bonded to the support substrate 2 by a bonding material.

In the example illustrated in FIG. 9A, the side surface of the fuel electrode 5 is covered with the solid electrolyte layer 6 to hermetically seal the gas-flow passage 2a through which the fuel gas flows. As illustrated in FIG. 9B, the side surface of the fuel electrode 5 may be covered and sealed with a sealing material 9 made of dense glass or ceramic. The sealing material 9 covering the side surface of the fuel electrode 5 may have electrical insulation properties.

The gas-flow passage 2a of the support substrate 2 may be made of the member 120 having unevenness as illustrated in FIG. 9C.

In the fourth embodiment, the member 120 is bonded to the air electrode 8 of another adjacent cell 1C via another electrically conductive member such as an inter-cell connecting member 60 and the bonding material 50. Note that the member 120 may be in direct contact with the air electrode 8 of the other adjacent cell 1C without the intervention of other electrically conductive members.

As illustrated in FIG. 9D, the member 120 includes the base member 40, and the coating layer 43. The base member 40 includes the first base member layer 41 and the second base member layer 42. Each part constituting the member 120 can be made of, for example, a material such as that of the electrically conductive member 18 described above. Although not illustrated in detail, the inter-cell connecting member 60 may also be the electrically conductive member 18 including the base member 40 and the coating layer 43.

The coating layer 43 is located between the base member 40 and the air electrode 8 of another adjacent cell 1C. The coating layer 43 contains a conductive oxide. The coating layer 43 may contain, for example, a composite oxide having a spinel structure. The coating layer 43 contains the first oxide that is an oxide of the first element whose absolute values of first ionization energy and free energy of formation of an oxide are smaller than those of chromium. The coating layer 43 contains, for example, one or more of the first elements.

In this manner, the coating layer 43 contains the specific oxide as described above, so that the second base member layer 42 is less likely to grow, and thus the member 120 is less likely to increase in internal resistance. This causes the battery performance of the cell 1C to be less likely to be decreased, which can reduce a decrease in the battery performance of the electrochemical cell device.

### Other Variations

Other variations of the embodiment will be described.

In the above embodiments, a fuel cell, a fuel cell stack device, a fuel cell module, and a fuel cell device are illustrated as examples of the "electrochemical cell", the "electrochemical cell device", the "module", and the "module housing device"; they may also be an electrolytic cell, an electrolytic cell stack device, an electrolytic module, and an electrolytic device, respectively, as other examples.

The conductive material containing the above-described specific oxide can be used for other applications.

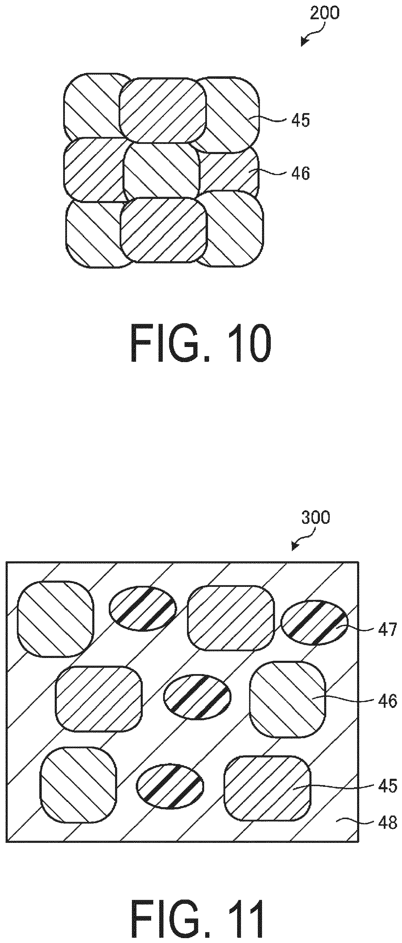

FIG. 10 is a view schematically illustrating an example of a conductive powder material according to an embodiment. As illustrated in FIG. 10, a conductive powder material 200 contains the oxide particles 45 and the first oxide particles 46.

The oxide particles 45 contain a conductive oxide. The oxide particles 45 may contain an oxide containing, for example, manganese (Mn) and cobalt (Co). The oxide particles 45 may contain elements other than Mn and Co, for example, zinc (Zn), iron (Fe) and aluminum (Al). The oxide particles 45 may contain a composite oxide having a spinel structure. Examples of the composite oxide having such a structure may include Zn(CoₓMn₁₋ₓ)₂O₄ (0 < x < 1) such as ZnMnCoO₄, Mn_{1.5}Co_{1.5}O₄, MnCo₂O₄, and CoMn₂O₄. In such a composite oxide, for example, a ratio of Fe to a total of metal elements contained in the composite oxide may be 60 atom% or less.

The first oxide particles 46 contain the oxide of the first element whose absolute values of first ionization energy and free energy of formation of an oxide are smaller than those of chromium. Examples of the first oxide, which is an oxide of the first element, include Y₂O₃, CeO₂, EuO, and PrO₂. The conductive powder material 200 contains, for example, one or more of the first oxides. The first oxide may contain an element other than the first element, such as gadolinium (Gd), samarium (Sm), or ytterbium (Yb). In the first oxide, for example, the first element may be substituted with Gd, Sm, or Yb at a ratio of 30 atom% or less.

Thus, the conductive powder material 200 containing the specific oxide and the first oxide as described above can be used as a conductive raw material or the like in forming an electrically conductive layer or a wire by the printing method, the dipping method, the thermal spraying method, the electrodeposition method, or the like, for example.

FIG. 11 is a view schematically illustrating an example of a slurry according to an embodiment.

As illustrated in FIG. 11, a slurry 300 contains the oxide particles 45, the first oxide particles 46, anionic resins 47, and a dispersion medium 48.

The oxide particles 45 contain a conductive oxide. The oxide particles 45 may contain an oxide containing, for example, manganese (Mn) and cobalt (Co). The oxide particles 45 may contain elements other than Mn and Co, for example, zinc (Zn), iron (Fe) and aluminum (Al). The oxide particles 45 may contain a composite oxide having a spinel structure. Examples of the composite oxide having such a structure may include Zn(CoₓMn₁₋ₓ)₂O₄ (0 < x < 1) such as ZnMnCoO₄, Mn_{1.5}Co_{1.5}O₄, MnCo₂O₄, and CoMn₂O₄. In such a composite oxide, for example, a ratio of Fe to a total of metal elements contained in the composite oxide may be 60 atom% or less.

The first oxide particles 46 contain the oxide of the first element whose absolute values of first ionization energy and free energy of formation of an oxide are smaller than those of chromium. Examples of the first oxide, which is an oxide of the first element, include Y₂O₃, CeO₂, EuO, and PrO₂. The slurry 300 contains, for example, one or more of the first oxides.

The anionic resins 47 may be, for example, dispersion auxiliary agents that assist uniform dispersion of the oxide particles 45 and the first oxide particles 46. The anionic resins 47 are removed together with the dispersion medium 48 by firing at a predetermined temperature or higher. Note that the slurry 300 need not contain the anionic resins 47.

The dispersion medium 48 has fluidity and disperses the solid components contained in the slurry 300. The dispersion medium 48 may be, for example, a volatile organic solvent or alcohol. The dispersion medium 48 may contain, for example, water. The dispersion medium 48 may dissolve at least a part of the solid components contained in the slurry 300.

Thus, the slurry 300 containing the specific oxide and the first oxide as described above can be used as a slurry in forming an electrically conductive layer by the electrodeposition method, for example.

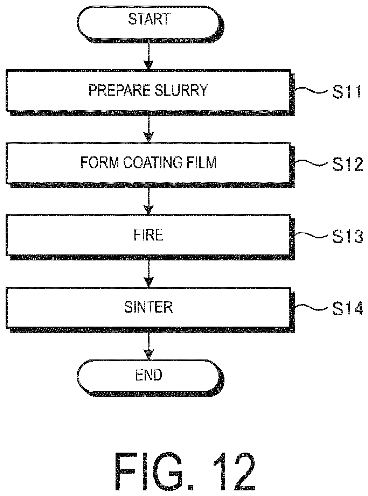

Manufacturing Method for Manufacturing Electrically Conductive Member FIG. 12 is a flowchart illustrating an example of a manufacturing method for manufacturing an electrically conductive member according to an embodiment.

First, a slurry containing conductive oxides, first oxides that are oxides of the first element whose absolute values of first ionization energy and free energy of formation of an oxide are smaller than those of chromium, and anionic resins is prepared (step S11).

Next, a coating film is formed on the surface of a base member containing chromium (step S12). The coating film contains main components of the slurry prepared in step S 11, that is, the conductive oxides, the first oxides that are oxides of the first element whose absolute values of first ionization energy and free energy of formation of an oxide are smaller than those of chromium, and the anionic resins. Such a coating film may be formed by, for example, the electrodeposition method.

Then, the base member with the coating film formed is fired to remove the anionic resins (step S13). Further, the fired base member is sintered to form a coating layer covering the base member (step S14). Note that step S13 and step S14 may be consecutively performed as a series of process.

While the present disclosure has been described in detail, the present disclosure is not limited to the aforementioned embodiment, and various changes, improvements, and the like can be made without departing from the gist of the present disclosure.

As described above, the electrically conductive member 18 according to the embodiment includes the base member 40 containing chromium and the coating layer 43 covering the base member 40. The coating layer 43 contains the conductive oxide and the first oxide that is an oxide of the first element whose absolute values of first ionization energy and free energy of formation of an oxide are smaller than those of chromium. Thus, the electrically conductive member 18 can be provided that reduces a decrease in battery performance due to an increase in internal resistance.

The electrochemical cell device (for example, the cell stack device 10) according to the embodiment includes two or more electrochemical cells (for example, the cells 1) each including the element portion 3, and the electrically conductive member 18 described above. Thus, the electrochemical cell device can be provided that reduces a decrease in battery performance due to an increase in internal resistance.

The module 100 according to the embodiment includes the electrochemical cell device (the cell stack device 10) described above, and the storage container 101 housing the electrochemical cell device. Thus, the module 100 can be provided that reduces a decrease in battery performance due to an increase in internal resistance.

The module housing device 110 according to the embodiment includes the module 100 described above, the auxiliary device configured to operate the module 100, and the external case housing the module 100 and the auxiliary device. Thus. the module housing device 110 can be provided that reduces a decrease in battery performance due to an increase in internal resistance.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1, 1A, 1B Cell
3, 3A, 3B Element portion
5 Fuel electrode
6 Solid electrolyte layer
7 Intermediate layer
8 Air electrode
10 Cell stack device
11 Cell stack
12 Fixing member
13 Fixing material
14 Support member
15 Support body
16 Gas tank
17 End current collection member
18 Electrically conductive member
100 Module
110 Module housing device

## Claims

1. An electrically conductive member comprising:
a base member containing chromium; and
a coating layer covering the base member, wherein
the coating layer contains a conductive oxide and a first oxide, the first oxide being an oxide of a first element whose absolute values of first ionization energy and free energy of formation of an oxide are smaller than those of chromium.

2. The electrically conductive member according to claim 1, wherein
the coating layer is a sintered body, the sintered body containing conductive oxide particles and first oxide particles containing the first oxide.

3. The electrically conductive member according to claim 2, wherein
the electrically conductive member contains 5 vol% or more and 50 vol% or less of the first oxide particles.

4. The electrically conductive member according to claim 2 or 3, wherein
the first oxide particles have an average particle diameter of 0.1 µm or more and 5 µm or less.

5. The electrically conductive member according to any one of claims 1 to 4, wherein
the conductive oxide contains a composite oxide having a spinel structure or a perovskite structure.

6. An electrochemical cell device comprising:
two or more electrochemical cells each comprising an element portion; and
the electrically conductive member according to any one of claims 1 to 5.

7. A module comprising:
the electrochemical cell device according to claim 6; and
a storage container housing the electrochemical cell device.

8. A module housing device comprising:
the module according to claim 7;
an auxiliary device configured to operate the module; and
an external case housing the module and the auxiliary device.

9. A slurry comprising:
conductive oxide particles;
first oxide particles containing a first oxide, the first oxide being an oxide of a first element whose absolute values of first ionization energy and free energy of formation of an oxide are smaller than those of chromium; and
an anionic resin.

10. A manufacturing method for manufacturing an electrically conductive member, the manufacturing method comprising:
forming, on a surface of a base member containing chromium, a coating film containing a conductive oxide, a first oxide that is an oxide of a first element whose absolute values of first ionization energy and free energy of formation of an oxide are smaller than those of chromium, and an anionic resin;
firing the base member with the coating film formed thereon; and
sintering the base member that has been fired.

11. The manufacturing method for manufacturing an electrically conductive member according to claim 10, wherein
in the sintering, a conductive coating layer containing 5 vol% or more and 50 vol% or less of first oxide particles is formed.

12. The manufacturing method for manufacturing an electrically conductive member according to claim 10 or 11, wherein
in the sintering, a conductive coating layer containing first oxide particles having an average particle diameter of 0.1 µm or more and 5 µm or less is formed.

13. A conductive material comprising:
a conductive oxide; and
a first oxide being an oxide of a first element whose absolute values of first ionization energy and free energy of formation of an oxide are smaller than those of chromium.

14. The conductive material according to claim 13, wherein
the conductive material is a sintered body, the sintered body comprising oxide particles containing the conductive oxide and first oxide particles containing the first oxide.

15. The conductive material according to claim 13 or 14, wherein
the conductive oxide contains a composite oxide having a spinel structure.

16. The conductive material according to claim 15, wherein
in the composite oxide, a ratio of Fe to a total of metal elements contained in the composite oxide is 60 atom% or less.

17. A conductive powder material comprising:
conductive oxide particles; and
first oxide particles containing a first oxide of a first element whose absolute values of first ionization energy and free energy of formation of an oxide are smaller than those of chromium.

18. The conductive powder material according to claim 17, wherein
the conductive oxide contains a composite oxide having a spinel structure.

19. The conductive powder material according to claim 18, wherein
in the composite oxide, a ratio of Fe to a total of metal elements contained in the composite oxide is 60 atom% or less.
